# EUROPEAN PATENT APPLICATION

(11) **EP 4 793 156 A1**
(43) Date of publication of application: **19.08.2026**
(21) Application number: 24875745.2
(22) Date of filing: 22.07.2024
(51) Int. Cl.: B62M 11/06

(54) **CONTINUOUSLY VARIABLE TRANSMISSION AND BICYCLE**

(30) Priority: 10.10.2023 CN 202311308923
(71) Applicant: Shenzhen Ximeet Technology Co., Ltd, Shenzhen, Guangdong 518000 (CN)
(72) Inventor: ZHU, TAIDing, Shenzhen, Guangdong 518000 (CN)
(74) Representative: Cabinet Chaillot
(86) International application number: PCT/CN2024/106827
(87) International publication number: WO 2025/077346

(57) **Abstract**

Provided in the present invention are a continuously variable transmission and a bicycle. The continuously variable transmission comprises a base; a first driving wheel; a variable transmission wheel, one side of the variable transmission wheel being provided with a plurality of first limiting structures distributed at equal intervals in the circumferential direction of the variable transmission wheel; first locking members, which are slidingly assembled on one side of the variable transmission wheel and have a locked state in which the first locking members are fixed to the first driving wheel and an unlocked state in which the first locking members are slidable in the circumferential direction of the first driving wheel; and a first speed adjustment wheel, which is rotationally assembled on the outer side of the base, the first speed adjustment wheel and the first driving wheel being coaxially arranged, and the first speed adjustment wheel being provided with a first triggering structure used for switching the first locking members between the locked state and the unlocked state. When the speed of the first driving wheel is constant, rotating the first speed adjustment wheel can alter the rotational speed of the variable transmission wheel, so as to implement continuously variable transmission, thus satisfying personalized adjustment requirements for pedaling force during riding.

## Description

### TECHNICAL FIELD

The present application relates to the technical field of bicycles, in particular to a continuously variable transmission and a bicycle.

### BACKGROUND

In the related art, bicycles or power-assisted bicycles equipped with stepped transmissions are divided into two types: internal and external transmissions. Both types of transmissions offer only a limited number of fixed gears. This often results in a situation where shifting up one gear makes pedaling too heavy, while shifting down one gear makes it too light, failing to meet the personalized need for pedaling resistance during cycling. Additionally, internal transmissions are heavy, and external transmissions are prone to chain drops during shifting, leading to certain drawbacks in the transmission systems used on bicycles or power-assisted bicycles.

### TECHNICAL PROBLEM

The technical problem addressed by the present application is to provide a continuously variable transmission and a bicycle, aiming to resolve the issue in related art where bicycles equipped with stepped transmissions fail to meet the personalized need for pedaling resistance.

### TECHNICAL SOLUTION

To address the aforementioned technical problem, in a first aspect, the present application provides a continuously variable transmission including:
a base;
a first drive wheel rotatably mounted on an outer side of the base;
a speed change generating wheel rotatably mounted on the outer side of the base, wherein an axis of the speed change generating wheel is eccentrically positioned relative to an axis of the first drive wheel, and a plurality of first limiting structures are distributed at equal circumferential intervals on one side of the speed change generating wheel;
a plurality of first locking members, slidably mounted on one side of the speed change generating wheel and having a locked state fixed relative to the first drive wheel and an unlocked state capable of sliding circumferentially along the first drive wheel, wherein each of the first locking members is corresponding to one of the plurality of first limiting structures to enable radial sliding of the first locking members along the speed change generating wheel and rotational movement with the speed change generating wheel; the plurality of the first locking members form a concentric circle coaxially arranged with the first drive wheel, wherein at least one of the first locking members is in the locked state and at least one is in the unlocked state; and
a first speed regulating wheel rotatably mounted on the outer side of the base and coaxially arranged with the first drive wheel, wherein the first speed regulating wheel is provided with a first trigger mechanism for switching the first locking members between the locked state and the unlocked state.

Optionally, each of the first limiting structure includes a first slide groove provided on the speed change generating wheel, and the length of the first slide groove extends radially along the speed change generating wheel; each of the first locking members is provided with a first sliding portion, which is slidably mounted in the first slide groove, with both sides of the first sliding portion abutting opposite side walls of the first slide groove, respectively.

Optionally, both ends of each of the first slide grooves enclose a concentric circle coaxially arranged with the speed change generating wheel.

Optionally, a ring-shaped mounting groove coaxial with the first drive wheel is provided on a side of the first drive wheel adjacent to the speed change generating wheel, and each of the first locking members is accommodated within the ring-shaped mounting groove; each of the first locking members further includes a first locking structure that cooperates with the first trigger mechanism to either fix the first locking member within the ring-shaped mounting groove in the locked state or allow the first locking member to slide within the ring-shaped mounting groove in the unlocked state.

Optionally, the first locking structure includes a contact portion engaging an inner wall of the ring-shaped mounting groove, and a locking portion cooperating with the contact portion and positioned opposite an outer wall of the ring-shaped mounting groove; wherein the contact portion is configured to drive the locking portion, upon triggering by the first trigger mechanism, to move to abut against the outer wall of the ring-shaped mounting groove or to separate from the outer wall of the ring-shaped mounting groove.

Optionally, the first trigger mechanism includes a protruding region and a recessed region disposed on one side surface of the first speed regulating wheel, wherein the protruding region and the recessed region enclose a concentric circle coaxially arranged with the ring-shaped mounting groove; when the contact portion contacts the recessed region, the contact portion drives the locking portion to move away from the outer wall of the ring-shaped mounting groove; when the contact portion contacts the protruding region, the contact portion drives the locking member to move toward the outer wall of the ring-shaped mounting groove.

Optionally, the first speed regulating wheel includes a first sleeve portion and a first support portion extending outward from a circumferential side of one end of the first sleeve portion; the first trigger mechanism is disposed on the first support portion, and the continuously variable transmission further includes a first connecting ring fixedly sleeved on an outer side of the first sleeve portion, wherein the first drive wheel is rotatably mounted on an outer side of the first connecting ring, and at least a portion of the first drive wheel is disposed between the first connecting ring and the first support portion.

Optionally, the continuously variable transmission further includes:
a second drive wheel rotatably mounted on the outer side of the base, wherein the speed change generating wheel is positioned between the first drive wheel and the second drive wheel, and the other side of the speed change generating wheel is provided with a plurality of second limiting structures distributed at equal circumferential intervals;
a plurality of second locking members, slidably mounted on the other side of the speed change generating wheel and having a locked state fixed relative to the second drive wheel and an unlocked state capable of sliding circumferentially along the second drive wheel, wherein each of the second locking members is corresponding to one of the second limiting structures to enable radial sliding of the second locking members along the speed change generating wheel and rotational movement with the speed change generating wheel; the plurality of second locking members form a concentric circle coaxially arranged with the second drive wheel, and at least one of the plurality of second locking members is in the locked state and at least one is in the unlocked state; and
a second speed regulating wheel rotatably mounted on the outer side of the base and coaxially arranged with the second drive wheel, wherein the second speed regulating wheel is provided with a second trigger mechanism for switching the second locking member between the locked state and the unlocked state.

Optionally, the continuously variable transmission further includes a first gear set meshed with the first speed regulating wheel and a second gear set meshed with both the first gear set and the second speed regulating wheel, wherein both the first gear set and the second gear set are mounted on the base.

In a second aspect, the present application provides a bicycle including any one of the above-mentioned continuously variable transmissions.

### BENEFICIAL EFFECT

Compared with the related art, the continuously variable transmission and the bicycle of the present application have beneficial effects as follows: the first drive wheel is connected to the speed change generating wheel via the first locking members, enabling the first drive wheel to drive the speed change generating wheel to rotate when the first drive wheel rotates. The first locking members can slide radially along the speed change generating wheel and follow its circumferential rotation. Each of the plurality of first locking members collectively forms a concentric circle coaxial with the first drive wheel, such that the speed corresponding to the position of each first locking member varies. When the first speed change generating wheel rotates, the first trigger mechanism can switch the first locking members between the locked state and the unlocked state, thereby rotating the first speed regulating wheel to yield different linear and angular velocities, achieving speed change adjustment. Consequently, while the speed of the first drive wheel remains constant, rotating the first speed regulating wheel can alter the rotational speed of the speed change generating wheel, realizing a continuously variable transmission. This can thus meet the personalized demand for pedaling resistance during cycling. Additionally, the continuously variable transmission can achieve non-frictional continuous speed variation, deliver high torque transmission, and offer high transmission efficiency. It enables gear shifting during stationary, rotating, and riding states, offering convenient speed control while maintaining lightweight and compact dimensions.

### BRIEF DESCRIPTION OF THE DRAWINGS

To more clearly illustrate the technical solutions in the embodiments of the present application or the related art, a brief introduction to the drawings required for describing the embodiments or related technologies is provided in the following. Obviously, the drawings described below merely represent some embodiments of the present application. For those skilled in the art, other drawings may be derived from these drawings without requiring creative labor.
FIG. 1 is a structural schematic diagram of a continuously variable transmission according to an embodiment of the present application.
FIG. 2 is an exploded view of the continuously variable transmission according to an embodiment of the present application.
FIG. 3 is an assembly schematic diagram showing a base, a first drive wheel, a first locking member, and a speed change generating wheel in the continuously variable transmission according to an embodiment of the present application.
FIG. 4 is an assembly schematic diagram showing the base, the first drive wheel, the first locking member, and a first speed regulating wheel in the continuously variable transmission according to an embodiment of the present application.
FIG. 5 is an assembly schematic diagram showing the first drive wheel and the first locking member in the continuously variable transmission according to an embodiment of the present application.
FIG. 6 is an assembly schematic diagram showing the first locking member, the first speed regulating wheel, and the speed change generating wheel in the continuously variable transmission according to an embodiment of the present application.
FIG. 7 is a structural schematic of the first locking member along the direction of the first view according to an embodiment of the present application.
FIG. 8 is a structural schematic of the first locking member along the direction of the second view according to an embodiment of the present application.
FIG. 9 is a structural schematic diagram of the first speed regulating wheel in the continuously variable transmission according to an embodiment of the present application.
FIG. 10 is an assembly schematic diagram showing the first speed regulating wheel, a first gear set, a second gear set, and a second speed regulating wheel in the continuously variable transmission according to an embodiment of the present application.
FIG. 11 is an angular variation schematic diagram between adjacent first locking members in the continuously variable transmission according to an embodiment of the present application.

In the drawings, the reference numerals denote: 1, base; 2, first drive wheel; 21, ring-shaped mounting groove; 3, speed change generating wheel; 31, first slide groove; 32, second slide groove; 4, first locking member; 41, first sliding portion; 42, contact portion; 43, locking portion; 5, first speed regulating wheel; 51, first sleeve portion; 52, first support portion; 521, protruding region; 522, recessed region; 6, first connecting ring; 7, second drive wheel; 8, second locking member; 9, second speed regulating wheel; 10, first gear set; 20, second gear set; 30, upper housing; 40, lower housing; 50, second connecting ring; 60, first decorative plate; 70, second decorative plate.

### DETAILED DESCRIPTION OF THE EMBODIMENTS

The embodiments of the present application are described in detail below, with examples of the embodiments illustrated in the accompanying drawings, wherein the same or similar reference numerals denote like or similar elements or elements having the same or similar functions throughout. The embodiments described below with reference to the accompanying drawings are exemplary and are intended to explain the present application, but should not be construed as limiting the invention. Based on the embodiments of the present application, all other embodiments obtained by a person of ordinary skill in the art without creative efforts shall fall within the scope of protection of the present application.

In the description of the present application, it should be understood that the terms "center," "longitudinal," "transverse," "length," "width," "thickness," "upper," "lower," "front," "rear," "left," "right," "vertical," "horizontal," "top," "bottom," "inner," "outer," "clockwise," "counterclockwise," "axial," "circumferential," "radial," and the like, are based on the orientation or positional relationships shown in the drawings. These are used solely for the purpose of facilitating the description of the present application and simplifying the description, and are not intended to indicate or imply that the devices or elements referred to must have a specific orientation, be constructed in a specific orientation, or operate in a specific orientation. Therefore, they should not be construed as limiting the scope of the present application.

Furthermore, the terms "first" and "second" are used solely for descriptive purposes and should not be construed as indicating or implying relative importance or as implying the number of technical features indicated. Thus, features defined as "first" and "second" may explicitly or implicitly include one or more such features. In the description of the present application, "multiple" means two or more, unless otherwise explicitly and specifically defined.

### Embodiments:

The embodiments of the present application provide a bicycle including a bicycle body and a continuously variable transmission (CVT) mounted thereon. By adjusting the continuously variable transmission, the bicycle can rapidly shift to the desired gear ratio within the transmission range while stationary, in motion, or coasting.

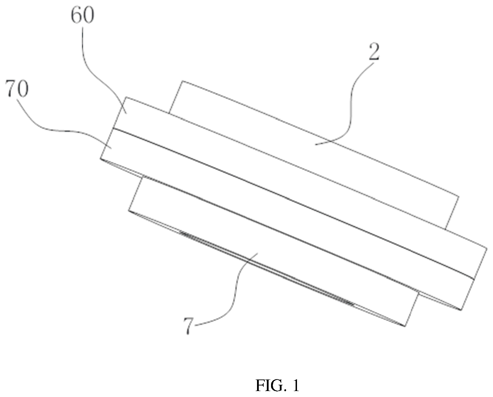

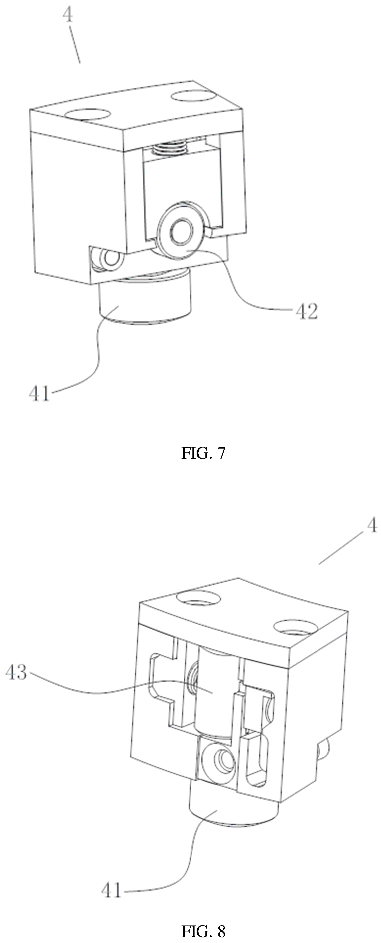

As shown in Figures 1 through 11, the continuously variable transmission includes a base 1, a first drive wheel 2, a speed change generating wheel 3, a plurality of first locking members 4, and a first speed regulating wheel 5. The first drive wheel 2 is rotatably mounted on the outer side of the base 1. The speed change generating wheel 3 is rotatably mounted on the outer side of the base 1, with its axis eccentrically positioned relative to the axis of the first drive wheel 2. A plurality of first limiting structures are distributed at equal circumferential intervals on one side of the speed change generating wheel 3. The first locking members 4 are slidably mounted on one side of the speed change generating wheel 3 and have a locked state fixed relative to the first drive wheel 2 and an unlocked state capable of sliding circumferentially along the first drive wheel 2. A plurality of first locking members 4 are spaced apart, with each first locking member 4 corresponding to one of the plurality of first limiting structures. This arrangement enables the first locking members 4 to slide radially along the speed change generating wheel 3 and rotate circumferentially with it. The plurality of first locking members 4 enclose a concentric circle coaxial with the first drive wheel 2, with at least one of the plurality of first locking members 4 in the locked state and at least one in the unlocked state. The first speed regulating wheel 5 is rotatably mounted on the outer side of the base 1. The first speed regulating wheel 5 is coaxially arranged with the first drive wheel 2 and is equipped with a first trigger mechanism for switching the first locking member 4 between the locked state and the unlocked state.

The first drive wheel 2 and the speed change generating wheel 3 are connected via the first locking member 4, enabling the rotation of the first drive wheel 2 to drive the rotation of the speed change generating wheel 3. The first locking member 4 can slide radially along the speed change generating wheel 3 and follow its circumferential rotation. The plurality of first locking members 4 are arranged concentrically around the first drive wheel 2 to form a concentric circle, with each locking member 4 corresponding to a distinct rotational speed. When the first speed regulating wheel 5 rotates, the first trigger mechanism enables the first locking member 4 to switch between the locked state and the unlocked state. This allows rotating the first speed regulating wheel 5 to achieve different linear and angular velocities, thereby completing speed adjustment. Consequently, while the speed of the first drive wheel 2 remains constant, rotating the first speed regulating wheel 5 alters the rotational speed of the speed change generating wheel 3, enabling stepless speed variation and meeting the demand for personalized adjustment of pedaling force during cycling. Additionally, this continuously variable transmission can achieve non-frictional continuous speed variation, deliver high torque transmission, and offer high transmission efficiency. It enables gear shifting during stationary, rotating, and riding states, offering convenient speed control while maintaining lightweight and compact dimensions.

It should be noted that either the first drive wheel 2 or the speed change generating wheel 3 functions as the speed input wheel, while the other serves as the speed output wheel. For example, when the first drive wheel 2 is the speed input wheel, and the speed change generating wheel 3 is the speed output wheel, rotating the first speed regulating wheel 5 while maintaining a constant speed of the first drive wheel 2 alters the rotational speed of the speed change generating wheel 3, thereby achieving stepless speed variation.

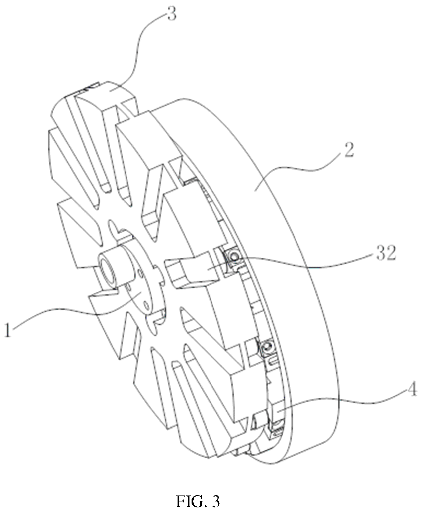

As shown in FIGS. 3, 5, and 6, each first limiting structure includes a first slide groove 31 formed on the speed change generating wheel 3 and extending radially along the speed change generating wheel 3. Each first locking member 4 is provided with a first sliding portion 41, which is slidably mounted within the first slide groove 31, enabling radial sliding of the first locking members 4 along the speed change generating wheel 3. Both sides of the first sliding portion 41 respectively abut the opposite side walls of the first slide groove 31, enabling the first locking members 4 to rotate circumferentially with the speed change generating wheel 3. The first slide groove 31 may be a rectangular groove, positioned on a side of the speed change generating wheel 3 adjacent to the first drive wheel 2. The first sliding portion 41 may be a cylindrical body, with the circumferential walls of the first sliding portion 41 abutting the opposite side walls of the first slide groove 31. The mutual engagement between the cylindrical body and the rectangular groove helps reduce the magnitude of friction between the first sliding portion 41 and the first slide groove 31, thereby enabling smoother sliding of the first sliding portion 41 within the first slide groove 31.

Preferably, a protective sleeve is fixedly mounted over the peripheral wall of the first sliding portion 41. The protective sleeve may be made of a material with higher hardness, that is, it possesses superior wear resistance compared to the first sliding portion 41. This prevents wear on the first sliding portion 41, thereby extending the service life of the first locking member 4.

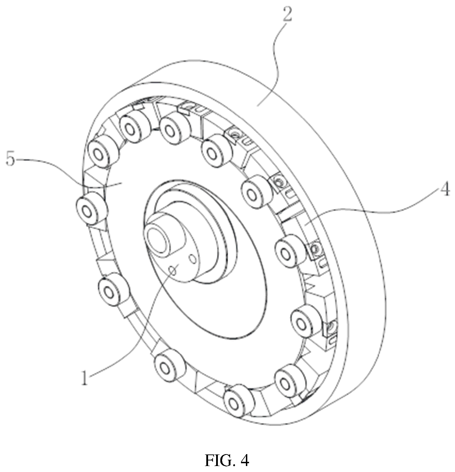

As shown in FIGS. 4, 6, and 11, both ends of each first slide groove 31 enclose a concentric circle coaxial with the speed change generating wheel 3. One end of each first slide groove 31 extends outward to the edge of the speed change generating wheel 3, while the other end extends inward a certain distance. The positions of each first locking member 4 within the corresponding first slide groove 31 differ when locked or unlocked, causing the first locking members 4 to form an eccentric circle with the speed change generating wheel 3. Since the first drive wheel 2 is eccentrically mounted relative to the speed change generating wheel 3, this arrangement ensures that the plurality of first locking members 4 collectively form a concentric circle coaxial with the first drive wheel 2.

It should be noted that the angle between any two adjacent first locking members 4 is different, and there are infinitely many possible angles between any two adjacent first locking members 4. When the speed change generating wheel 3 rotates, it drives the first locking members 4 to rotate along with it through the first slide grooves 31. The first locking members 4 undergo continuous changes in linear velocity and angular velocity relative to the first drive wheel 2. Specifically, when the speed change generating wheel 3 rotates uniformly for one revolution, the first locking member 4 slides circumferentially along the first drive wheel 2 and rotates for one revolution, but not uniformly. The movement speed of each first locking member 4 is characterized by either continuous acceleration for a certain angle followed by continuous deceleration, or continuous deceleration for a certain angle followed by continuous acceleration. The average speed of the speed change generating wheel 3 rotating one revolution is consistent with the average speed of the first locking member 4 rotating one revolution. The principle of stepless speed variation is explained below:

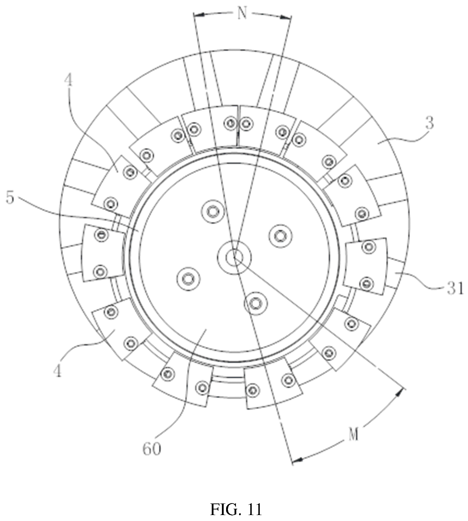

As shown in FIG. 11, the minimum angle between adjacent first locking members 4 is N, and the maximum angle is M (M > N). The ratio of M to N represents the maximum speed variation range. The eccentric distance between the speed change generating wheel 3 and the first drive wheel 2 determines the maximum speed ratio. As the first locking members 4 slide circumferentially along the first drive wheel 2 from the minimum angle N to the maximum angle M, the angle between the first locking members 4 continuously increases from N to M, forming an infinite number of angular positions to achieve stepless speed variation.

As shown in FIGS. 3, 4, and 5, the side of the first drive wheel 2 adjacent to the speed change generating wheel 3 is provided with a ring-shaped mounting groove 21 coaxial with the first drive wheel 2. Each first locking member 4 is accommodated within the ring-shaped mounting groove 21. Each first locking member 4 further includes a first locking structure that cooperates with a first trigger mechanism to fix the first locking member 4 in the locked state within the ring-shaped mounting groove 21. In this state, the first drive wheel 2 drives the speed change generating wheel 3 to rotate via the first locking member 4. Alternatively, the first locking structure cooperates with the first trigger mechanism to allow the first locking member 4 to be slidably mounted within the ring-shaped mounting groove 21 in an unlocked state. In this state, the first locking member 4 slides within the ring-shaped mounting groove 21, enabling adjustment of the speed ratio between the first drive wheel 2 and the speed change generating wheel 3. Specifically, when rotating the first speed regulating wheel 5, the first trigger mechanism changes position in response to the rotation of the first speed regulating wheel 5. This alters the position of the first locking member 4 within the ring-shaped mounting groove 21 when the first trigger mechanism engages the first locking structure. The plurality of first locking members 4 are distributed within the ring-shaped mounting groove 21, with each first locking member 4 corresponding to a different speed position. Consequently, rotating the first speed regulating wheel 5 yields different linear and angular velocities, thereby achieving speed variation adjustment.

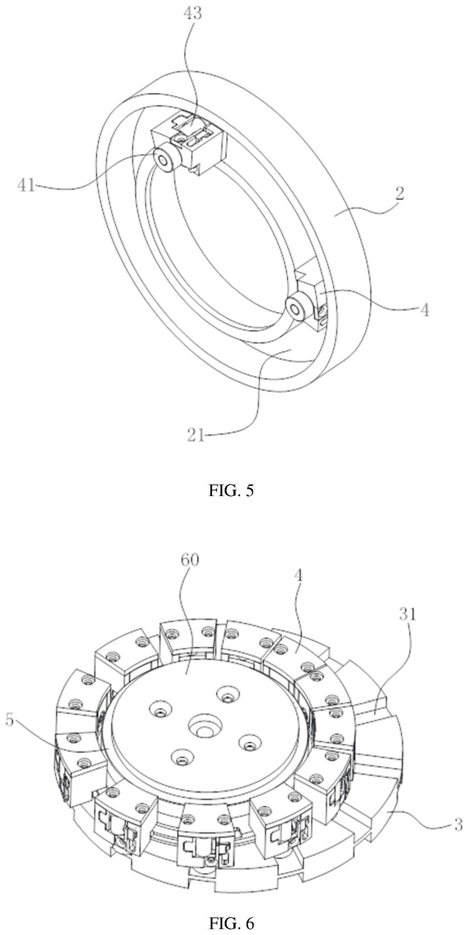

As shown in FIGS. 5 through 8, each first locking structure includes a contact portion 42 engaging the inner wall of the ring-shaped mounting groove 21, and a locking portion 43 that cooperates with the contact portion 42 and is positioned opposite the outer wall of the ring-shaped mounting groove 21. The contact portion 42 is configured to drive the locking portion 43 to move to abut against the outer wall of the ring-shaped mounting groove 21 or separate from the outer wall of the ring-shaped mounting groove 21 when triggered by the first trigger mechanism. Specifically, when the first trigger mechanism activates the contact portion 42, the locking portion 43 is driven by the contact portion 42 to abut against the outer wall of the ring-shaped mounting groove 21. In this circumstance, the contact portion 42 and the locking portion 43 abut against the inner wall and outer wall of the ring-shaped mounting groove 21, respectively, thereby fixing the first locking member 4 to the ring-shaped mounting groove 21, and placing the first locking member 4 in the locked state. When the first trigger mechanism does not activate the contact portion 42, the locking portion 43 is not driven by the contact portion 42 and moves back to separate from the outer wall of the ring-shaped mounting groove 21. This allows the first locking member 4 to slide within the ring-shaped mounting groove 21, placing the first locking member 4 in the unlocked state.

It should be noted that the contact portion 42 is movably mounted on the first locking member 4, while the locking portion 43 is resiliently mounted on the first locking member 4. The contact portion 42 and the locking portion 43 engage in angular sliding cooperation. For example, the contact portion 42 slides vertically, and both the contact portion 42 and the locking portion 43 feature inclined surfaces on their oppositely positioned sides. When the contact member 42 is triggered to slide upward, it pushes the locking portion 43 toward the outer wall of the ring-shaped mounting groove 21 until the locking portion 43 abuts the inner wall of the ring-shaped mounting groove 21, at which point the locking portion 43 is in a compressed state. When the contact member 42 is not triggered, the locking portion 43 moves away from the outer wall of the ring-shaped mounting groove 21 under the action of a restoring force, causing the contact member 42 to slide downward.

In some embodiments, the side surface of the locking portion 43 facing the outer wall of the ring-shaped mounting groove 21 is curved, and this curved surface is adapted to fit the wall surface of the outer wall of the ring-shaped mounting groove 21. When the contact portion 42 pushes the locking portion 43 toward the outer wall of the ring-shaped mounting groove 21 until it contacts the wall surface of the outer wall of the ring-shaped mounting groove 21, the first locking member 4 and the first drive wheel 2 form an overrunning clutch, thereby achieving the locking of the first locking member 4.

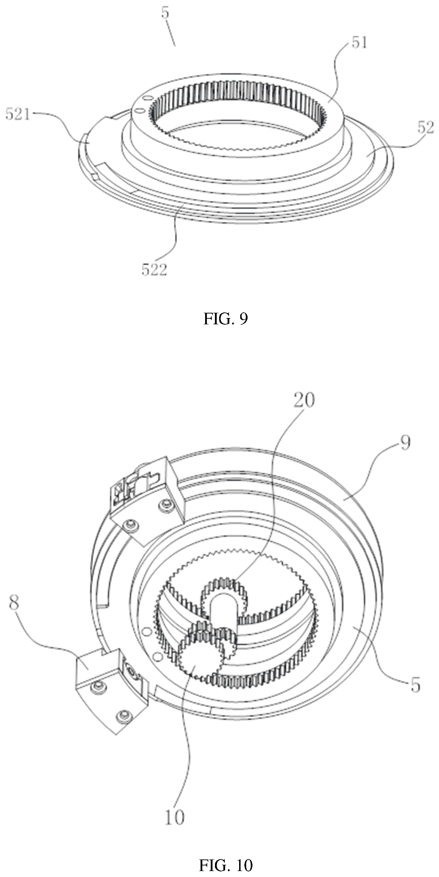

As shown in FIGS. 9 and 10, the first trigger mechanism includes a protruding region 521 and a recessed region 522 formed on one side surface of the first speed regulating wheel 5. The protruding region 521 and the recessed region 522 enclose a concentric circle coaxially aligned with the ring-shaped mounting groove 21. When the contact portion 42 contacts the recessed region 522, the contact portion 42 drives the locking portion 43 to move away from the outer wall of the ring-shaped mounting groove 21. When the contact portion 42 contacts the protruding region 521, the contact portion 42 drives the locking portion 43 to move toward the outer wall of the ring-shaped mounting groove 21. By forming a protruding region 521 on one side surface of the first speed regulating wheel 5 to abut against the contact portion 42 and cause it to slide upward, or by forming a recessed region 522 on one side surface of the first speed regulating wheel 5 to provide space for the contact portion 42 to slide downward, the first trigger mechanism triggers the contact portion 42.

It should be understood that when rotating the first speed regulating wheel 5, the boundary between the protruding region 521 and the recessed region 522 on the first speed regulating wheel 5 rotates with the first speed regulating wheel 5, thereby altering the position where the first trigger mechanism engages the first locking member 4. The first speed regulating wheel 5 continuously maintains triggering between at least two adjacent first locking members 4 within the range between the minimum angle position and the maximum angle position. The movement of the first locking member 4 from the minimum angle position to the maximum angle position constitutes continuous acceleration.

The following describes the speed input and output principles for the first drive wheel 2 or the speed change generating wheel 3, using the first drive wheel 2 as the input wheel and the speed change generating wheel 3 as the output wheel for illustration:
For the input wheel, only the faster-rotating of the two engaged first locking members 4 remains locked with the first drive wheel 2, while the slower one is unlocked and transitions to overrunning. When the faster-rotating first locking member 4 is triggered to unlock, the slower one is triggered to lock and shifts from overrunning to driving. Rotation of the first drive wheel 2 drives the locked first locking member 4 to rotate. The first locking members 4 then drive the speed change generating wheel 3 to rotate, thereby completing speed input.

For the output wheel, only the faster-rotating of the two active first locking members 4 remains locked with the speed change generating wheel 3. The slower-rotating one becomes unlocked with the speed change generating wheel 3 and transitions to overrunning follow-up. When the faster-rotating first locking member 4 is triggered to transition to the unlocked state, the slower-rotating one is triggered to lock and shifts from overrunning to driving. The first locking members 4 drive the speed change generating wheel 3 to rotate, thereby completing speed input.

As shown in FIGS. 6, 9, and 10, the first speed regulating wheel 5 includes a first sleeve portion 51 and a first support portion 52 extending outward from the circumferential side of one end of the first sleeve portion 51. The first trigger mechanism is positioned on the first support portion 52. The continuously variable transmission further includes a first connecting ring 6 fixedly sleeved on the outer side of the first sleeve portion 51. The first drive wheel 2 is rotatably mounted on the outer side of the first connecting ring 6, with at least a portion of the first drive wheel 2 positioned between the first connecting ring 6 and the first support portion 52. Specifically, the first sleeve portion 51 is sleeved on the outer side of the base 1 and is rotatably assembled with the base 1. The first support portion 52 is located at the end of the first sleeve portion 51 close to the speed change generating wheel 3. The first trigger mechanism is provided on the surface of the first support portion 52 close to the first drive wheel 2, i.e., the surface of one side of the first support portion 52 close to the first drive wheel 2 is provided with the protruding region 521 and the recessed region 522. The end of the first drive wheel 2 facing the speed change generating wheel 3 features an annular flange positioned between the first connecting ring 6 and the first support portion 52. This arrangement enables the assembly of the first speed regulating wheel 5, the speed change generating wheel 3, and the first drive wheel 2 onto the base 1. The structure is simple and occupies minimal space, facilitating the miniaturization of the continuously variable transmission.

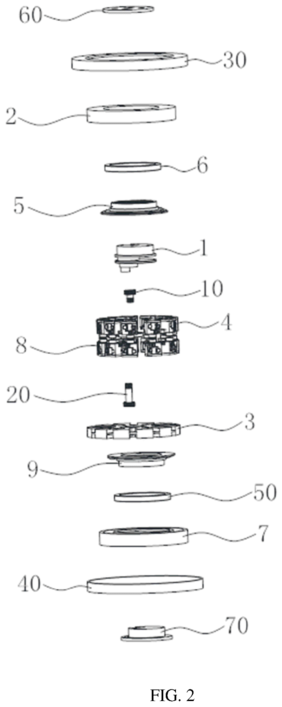

As shown in FIGS. 1 and 2, in some embodiments, the continuously variable transmission further includes a second drive wheel 7, a plurality of second locking members 8, and a second speed regulating wheel 9. The second drive wheel 7 is rotatably mounted on the outer side of the base 1. The speed change generating wheel 3 is positioned between the first drive wheel 2 and the second drive wheel 7. The other side of the speed change generating wheel 3 is provided with the plurality of second limiting structures distributed at equal circumferential intervals. The second locking members 8 are slidably mounted on the other side of the speed change generating wheel 3 and has a locked state fixed to the second drive wheel 7 and an unlocked state capable of sliding circumferentially along the second drive wheel 7. The plurality of second locking members 8 are spaced apart, with each second locking member 8 corresponding to one of the plurality of second limiting structures. This arrangement enables the second locking members 8 to slide radially along the speed change generating wheel 3 and rotate circumferentially with the speed change generating wheel 3. The plurality of second locking members 8 form a concentric circle coaxial with the second drive wheel 7. At least one of the plurality of second locking members 8 is in the locked state, while at least one is in the unlocked state. The second speed regulating wheel 9 is rotatably mounted on the outer side of the base 1. The second speed regulating wheel 9 is coaxially arranged with the second drive wheel 7 and is equipped with a second trigger mechanism for switching the second locking member 8 between the locked and unlocked states.

Specifically, one of the first drive wheel 2 and the second drive wheel 7 serves as the input wheel, while the other serves as the output wheel. The first locking members 4 between the first drive wheel 2 and the speed change generating wheel 3, and the second locking members 8 between the second drive wheel 7 and the speed change generating wheel 3, enable two-stage speed changes in the continuously variable transmission. The second limiting structure includes the second slide groove 32 formed on the speed change generating wheel 3, with the length of the second slide groove 32 extending radially along the speed change generating wheel 3. Each second locking member 8 is provided with a second sliding portion, which is slidably mounted within the second slide groove 32, enabling the second locking member 8 to slide radially along the speed change generating member 3. Both sides of the second sliding portion abut the respective opposite side walls of the second slide groove 32, allowing the second locking member 8 to rotate circumferentially with the speed change generating wheel 3. The first slide groove 31 and the second slide groove 32 are respectively provided on opposite sides of the speed change generating wheel 3, and the configuration of the second slide groove 32 is identical to that of the first slide groove 31.

It should be noted that the configuration of the second locking members 8 between the second drive wheel 7 and the speed change generating wheel 3 is identical to that of the first locking members 4 between the first drive wheel 2 and the speed change generating wheel 3. The second speed change generating wheel and the first speed change generating wheel share the same configuration. The continuously variable transmission further includes a second connecting ring 50 fixedly mounted on the outer periphery of the second speed regulating wheel. The configuration of the second connecting ring 50 is identical to that of the first connecting ring 6 and is not described again here.

As shown in FIGS. 2 and 10, the continuously variable transmission further includes a first gear set 10 meshed with the first speed regulating wheel 5 and a second gear set 20 meshed with both the first gear set 10 and the second speed regulating wheel 9. Both the first gear set 10 and the second gear set 20 are mounted on the base 1. Specifically, both the first speed regulating wheel 5 and the second speed regulating wheel 9 are provided with racks on their inner rings. The first gear set 10 meshes with the first speed regulating wheel 5 via the rack on the first speed regulating wheel 5, while the second gear set 20 meshes with the second speed regulating wheel 9 via the rack on the second speed regulating wheel 9. The first gear set 10 includes a first connecting shaft and two gears disposed at opposite ends of the first connecting shaft. One of the two gears meshes with the second gear set 20, while the other meshes with the rack on the first speed regulating wheel 5. The second gear set 20 includes a second connecting shaft and two gears respectively mounted at both ends of the second connecting shaft. One of the two gears meshes with the first gear set 10, while the other meshes with the rack on the second speed regulating wheel 9. The second speed regulating wheel 9 may be provided with a manipulation hole. By manipulating the second speed regulating wheel 9 through the manipulation hole using a tool, the first speed regulating wheel 5 is driven to rotate via the second gear set 20 and the first gear set 10, thereby achieving speed adjustment through the rotation of the first speed regulating wheel 5 and the second speed regulating wheel 9.

As shown in FIGS. 1 and 2, the continuously variable transmission further includes an upper housing 30 and a lower housing 40. The upper housing 30 and the lower housing 40 enclose an accommodation space. The base 1 is fixed within the accommodation space, with the first drive wheel 2, the first speed regulating wheel 5, the speed change generating wheel 3, the second drive wheel 7, and the second speed regulating wheel 9 all housed within the accommodation space. The upper housing 30 and the lower housing 40 are sealed together to prevent contaminants from entering the enclosure space.

As shown in FIGS. 1 and 2, the continuously variable transmission further includes a first decorative plate 60 and a second decorative plate 70. The first decorative plate 60 and the second decorative plate 70 are fixed to the first speed regulating wheel 5 and the second speed regulating wheel 9, respectively. The first decorative plate 60 and the second decorative plate 70 are configured to cover the first gear set 10 and the second gear set 20, preventing the first gear set 10 and the second gear set 20 from being exposed to the outside environment.

Described above are the preferred embodiments provided by the present application and are not intended to limit the present application. Any modifications, equivalent substitutions, and improvements made within the spirit and principles of the present application should be included within the scope of protection of the present application.

## Claims

1. A continuously variable transmission, comprising:
a base;
a first drive wheel rotatably mounted on an outer side of the base;
a speed change generating wheel rotatably mounted on the outer side of the base, wherein an axis of the speed change generating wheel is eccentrically positioned relative to an axis of the first drive wheel, and a plurality of first limiting structures are distributed at equal circumferential intervals on one side of the speed change generating wheel;
a plurality of first locking members, slidably mounted on one side of the speed change generating wheel and having a locked state fixed relative to the first drive wheel and an unlocked state capable of sliding circumferentially along the first drive wheel, wherein each of the first locking members is corresponding to one of the plurality of first limiting structures to enable radial sliding of the first locking members along the speed change generating wheel and rotational movement with the speed change generating wheel; the plurality of the first locking members form a concentric circle coaxially arranged with the first drive wheel, wherein at least one of the first locking members is in the locked state and at least one is in the unlocked state; and
a first speed regulating wheel rotatably mounted on the outer side of the base and coaxially arranged with the first drive wheel, wherein the first speed regulating wheel is provided with a first trigger mechanism for switching the first locking members between the locked state and the unlocked state.

2. The continuously variable transmission of claim 1, wherein each of the first limiting structure comprises a first slide groove provided on the speed change generating wheel, and the length of the first slide groove extends radially along the speed change generating wheel; each of the first locking members is provided with a first sliding portion, which is slidably mounted in the first slide groove, with both sides of the first sliding portion abutting opposite side walls of the first slide groove, respectively.

3. The continuously variable transmission of claim 2, wherein both ends of each of the first slide grooves enclose a concentric circle coaxially arranged with the speed change generating wheel.

4. The continuously variable transmission of claim 1, wherein a ring-shaped mounting groove coaxial with the first drive wheel is provided on a side of the first drive wheel adjacent to the speed change generating wheel, and each of the first locking members is accommodated within the ring-shaped mounting groove; each of the first locking members further comprises a first locking structure that cooperates with the first trigger mechanism to either fix the first locking member within the ring-shaped mounting groove in the locked state or allow the first locking member to slide within the ring-shaped mounting groove in the unlocked state.

5. The continuously variable transmission of claim 4, wherein the first locking structure comprises a contact portion engaging an inner wall of the ring-shaped mounting groove, and a locking portion cooperating with the contact portion and positioned opposite an outer wall of the ring-shaped mounting groove; wherein the contact portion is configured to drive the locking portion, upon triggering by the first trigger mechanism, to move to abut against the outer wall of the ring-shaped mounting groove or trigger mechanism to separate from the outer wall of the ring-shaped mounting groove.

6. The continuously variable transmission of claim 5, wherein the first trigger mechanism comprises a protruding region and a recessed region disposed on one side surface of the first speed regulating wheel, wherein the protruding region and the recessed region enclose a concentric circle coaxially arranged with the ring-shaped mounting groove; when the contact portion contacts the recessed region, the contact portion drives the locking portion to move away from the outer wall of the ring-shaped mounting groove; when the contact portion contacts the protruding region, the contact portion drives the locking member to move toward the outer wall of the ring-shaped mounting groove.

7. The continuously variable transmission of claim 1, wherein the first speed regulating wheel comprises a first sleeve portion and a first support portion extending outward from a circumferential side of one end of the first sleeve portion; the first trigger mechanism is disposed on the first support portion, and the continuously variable transmission further comprises a first connecting ring fixedly sleeved on an outer side of the first sleeve portion, wherein the first drive wheel is rotatably mounted on an outer side of the first connecting ring, and at least a portion of the first drive wheel is disposed between the first connecting ring and the first support portion.

8. The continuously variable transmission of claim 1, further comprising:
a second drive wheel rotatably mounted on the outer side of the base, wherein the speed change generating wheel is positioned between the first drive wheel and the second drive wheel, and the other side of the speed change generating wheel is provided with a plurality of second limiting structures distributed at equal circumferential intervals;
a plurality of second locking members, slidably mounted on the other side of the speed change generating wheel and having a locked state fixed relative to the second drive wheel and an unlocked state capable of sliding circumferentially along the second drive wheel, wherein each of the second locking members is corresponding to one of the second limiting structures to enable radial sliding of the second locking members along the speed change generating wheel and rotational movement with the speed change generating wheel; the plurality of second locking members form a concentric circle coaxially arranged with the second drive wheel, and at least one of the plurality of second locking members is in the locked state and at least one is in the unlocked state; and
a second speed regulating wheel rotatably mounted on the outer side of the base and coaxially arranged with the second drive wheel, wherein the second speed regulating wheel is provided with a second trigger mechanism for switching the second locking member between the locked state and the unlocked state.

9. The continuously variable transmission of claim 8, further comprising a first gear set meshed with the first speed regulating wheel and a second gear set meshed with both the first gear set and the second speed regulating wheel, wherein both the first gear set and the second gear set are mounted on the base.

10. A bicycle, comprises a continuously variable transmission of any one of claims 1 to 9.
